# EUROPÄISCHE PATENTSCHRIFT

(11) **EP 0 847 301 B1**
(45) Veröffentlichungstag und Bekanntmachung des Hinweises auf die Patenterteilung: **13.11.2002**
(21) Anmeldenummer: 97923743.5
(22) Anmeldetag: 19.04.1997
(51) Int. Cl.: B01D 35/06, B01D 35/01, C02F 1/42, C02F 1/28, C02F 1/48

(54) **WASSERAUFBEREITUNGSVORRICHTUNG**
WATER-TREATMENT DEVICE
DISPOSITIF DE TRAITEMENT DES EAUX

(30) Priorität: 24.05.1996 DE 19620961
(43) Veröffentlichungstag der Anmeldung: 17.06.1998
(73) Patentinhaber: Meyer, Dieter, 31542 Bad Nenndorf (DE); Braun, Hans-Peter, 31535 Neustadt (DE)
(72) Erfinder: MEYER, Dieter, D-31542 Bad Nenndorf (DE); BRAUN, Hans-Peter, D-31535 Neustadt (DE); MEYER, Brigitte, D-31542 Bad Nenndorf (DE); BRAUN, Evelyn, D-31535 Neustadt (DE)
(74) Vertreter: Patentanwälte Thömen & Körner
(86) Internationale Anmeldenummer: DE9700803
(87) Internationale Veröffentlichungsnummer: WO97045187

(56) Entgegenhaltungen:
- FR-A- 2 693 662
- US-A- 4 305 826
- US-A- 5 407 573
- DATABASE WPI Section Ch, Week 9124 Derwent Publications Ltd., London, GB; Class D04, AN 91-174966 XP002039621 & PATENT ABSTRACTS OF JAPAN vol. 15, no. 293 (C-0853), 25.Juli 1991 & JP 03 106489 A (KAORU NAKAE ET AL.), 7.Mai 1991,

## Beschreibung

Die Erfindung betrifft eine Wasseraufbereitungsvorrichtung nach dem Oberbegriff des Anspruchs 1.

Trinkwasser ist für den menschlichen Genuß geeignetes Wasser, dessen Qualität den geltenden gesetzlichen Bestimmungen und sonstigen einschlägigen Regeln nach DIN 2000 und DIN 2001 entspricht. Nach DIN 2000 sollen sich die Güteanforderungen an das Trinkwasser an den "Eigenschaften eines aus genügender Tiefe und aus ausreichend filtrierenden Schichten gewonnenen Grundwassers von einwandfreier Beschaffenheit, das dem natürlichen Wasserkreislauf entnommen und in keiner Weise beeinträchtigt wurde" orientieren. Dieses Wasser enthält bestimmte Mindestkonzentrationen an Kalzium-, Magnesium- und Hydrogencarbonat-Ionen sowie wenig organische Verbindungen und relativ viel gelösten Sauerstoff.

Dementsprechend muß Trinkwasser frei sein von Krankheitserregern und darf keine gesundheitsschädigenden Eigenschaften haben. Es soll keimarm sein, appetitlich sein und zum Genuß anregen und es soll farblos, klar, kühl, geruchlos und geschmacklich einwandfrei sein. Der Gehalt an gelösten Stoffen soll sich in Grenzen halten. Wenn das Rohwasser diese Eigenschaften nicht aufweist, müssen sie ihm durch entsprechende Maßnahmen der Wasseraufbereitung verliehen werden.

Rohwasser, das diesem Ideal entspricht, steht für die Versorgung mit Trinkwasser nicht ausreichend zur Verfügung. Daher wird Rohwasser verwendet, das aus oberflächennahen Schichten oder aus Flüssen gewonnen wird, aber durch Schadstoffe belastet ist, die durch Regen, Abfalldeponien, Abwasser oder Düngemittel und Pestzide in der Landwirtschaft an die Umwelt abgegeben wurden.

Häufig ist das Rohwasser durch eine Kombination unterschiedlicher Schadstoffe belastet. Es ist dann erforderlich, auch unterschiedliche Behandlungsmethoden anzuwenden, um möglichst alle Schadstoffe zu entfernen. Wurde das Rohwasser bereits im Wasserwerk behandelt, können trotzdem Schadstoffe vorhanden sein, die die Trinkwasserqualität beeinflussen. Hierbei kann es sich um Schadstoffe handeln, die bei der Aufbereitung des Rohwasser im Wasserwerk anstelle der beseitigten Schadstoffe entstehen und in das gelieferte Wasser abgegeben werden, oder um Chlorgas, das zur Entkeimung und Sicherstellung der Keimfreiheit beim Transport im Leitungsnetz zugesetzt wird. Teilweise fehlen dem Rohwasser aber auch Mineralien, so daß die Mindestkonzentrationen an Kalzium-, Magnesiumund Hydrogencarbonat-Ionen nicht vorhanden ist. Diese Mineralien müssen dann ergänzt werden, damit das Wasser Trinkwasserqualität erhält.

Die US-A-4305826 beschreibt ein vierschichtiges Filter mit einer ersten Schicht aus Aktivkohlepartikeln, einer zweiten Schicht aus organischen Kationenaustauscherharz, einer dritten Schicht aus Zeolithe und einer vierten Schicht aus Filtersandkörnern.

Die Aktivkohlepartikeln adsorbieren in erster Linie organische Komponenten und Gase einschließlich der Chlorphenole und des Chlors. Das organische Kationenaustauscherharz enthärtet das Wasser, indem es die im Wasser gelösten Ca²⁺-Ionen und die Mg²⁺-Ionen gegen Na⁺-Ionen austauscht. Die dritte Schicht aus Zeolithe hat ebenfalls Kationenaustauschereigenschaften und enthärtet das Wasser. Es dient allerdings auch dazu, Partikel, die größer als 20 µm sind, herauszufiltern. Bei der vierten Schicht handelt es sich um einen Quarzsandfilter. Die Größe der Quarzsandkörner ist so gewählt, das hohe Durchflußraten des Wassers möglich sind. Der Sand dient dazu, das Wasser beim Waschen des Filters gleichmäßig im Filter zu verteilen und eine Durchmischung der einzelnen Filterschichten zu verhindern.

Die Filterschichten sind vertikal in einem Filtergehäuse angeordnet, wobei sich einzelne Filterschichten in horizontaler Ebene berühren. Das Rohwasser durchströmt die einzelnen Filterschichten nacheinander in vertikaler Richtung.

Die US-A-5407573 beschreibt ein Filter, durch das im wesentlichen nur die Desinfektion von Wasser erreicht wird. Das Filter umfaßt mehrere hintereinandergeschaltete, sich horizontal berührende Kammern. Die erste Kammer enthält ein biozides Harz, das biozide Stoffe an das vorbeiströmende Wasser abgibt. Anschließend strömt das Wasser durch eine spezielle Scheibe, die eine drehende Bewegung des Wassers verursacht. Das Wasser strömt daraufhin sofort in eine weitere Kammer, in der die mit dem Biozid in Kontakt gekommenen Mikroorganismen vollständig zerstört werden. Das dabei freigesetzte Biozid wird in einer nächsten Kammer wieder aus dem Wasser entfernt. Schließlich passiert das Wasser eine bakteriostatische Kammer.

Die JP 3106489 befaßt sich mit der Schaffung eines Filters zum vollständigen Entfernen von Chlor aus Wasser.

Das Filter umfaßt einen inneren und einen äußeren Zylinder. Das Rohwasser strömt durch eine Einlaßöffnung des äußeren Zylinders in eine Passage zwischen äußeren und inneren Zylinder und passiert anschließend weitere Einlaßöffnungen am oberen Ende des inneren Zylinders. Daraufhin strömt das Rohwasser durch eine Filterschicht aus pulverförmigen Krebsschalen mit oder ohne natürlicher Zeolithe und porösen Keramiken. Schließlich verläßt das aufbereitete Wasser das Filter durch Auslaßöffnungen am unteren Ende des inneren und äußeren Zylinders.

Der Erfindung liegt die Aufgabe zugrunde, eine Wasseraufbereitungsvorrichtung zu schaffen, welche auch mit unterschiedlichen Arten von Schadstoffen belastetes Rohwasser zu Trinkwasser aufbereitet.

Diese Aufgabe wird bei einer Wasseraufbereitungsvorrichtung nach dem Oberbegriff des Anspruchs 1 durch die im Kennzeichen angegebenen Merkmale gelöst. Weiterbildungen und vorteilhafte Ausgestaltungen der Erfindung ergeben sich aus den Unteransprüchen.

Bei der erfindungsgemäßen Wasseraufbereitungsvorrichtung sind als weitere Behandlungsstufen ein Verwirbeler und ein Kapillarkörper vorhanden.

Durch den Verwirbeler wird eine Sauerstoffinjektion erreicht, wodurch das aufbereitete Rohwasser die Kriterien der guten geschmacklichen Qualität erfüllt und die Oxidation von Schadstoffen gefördert wird.

Im Kapillarkörper erfolgt eine Entchlorung des Rohwassers, wodurch das z. B. zur Entkeimung im Wasserwerk zugesetzte Chlorgas aus dem Rohwasser entfernt und im Kapillarkörper gebunden wird. Als Kapillarkörper sind mit Kapillaren durchsetzte Steine, wie sie z. B. in der Natur als Lavagestein vorkommen oder mit Kapillaren durchsetzte Kunstharze einsetzbar.

Ferner ist wenigstens ein Teil der Behandlungsstufen durch konisch verlaufende Trennwände mit Überströmöffnungen voneinander abgeteilt. Die überströmöffnungen sind in aufeinanderfolgenden Trennwänden, gegenseitig am Umfang und/oder im Durchmesser versetzt angeordnet. Durch diese Maßnahme wird die Strömung des Rohwassers mehrfach umgelenkt und so der Strömungsweg durch die Behandlungsstufen ohne Veränderung der Baugröße der Wasseraufbereitungsvorrichtung verlängert und dadurch die Aufenthaltsdauer und Behandlungszeit in den Behandlungsstufen vergrößert.

Vorteilhaft ist innerhalb des Gehäuses eine zentrale Säule angeordnet. Diese Säule versperrt den direkten Weg von der Einlaßöffnung zur Auslaßöffnung und zwingt das Rohwasser, durch den Ringraum mit den zahlreichen Umwegen zu strömen. Auf diese Weise wird eine zu schnelle Durchströmung vermieden und eine intensive Behandlung des Rohwassers gewährleistet. Im übrigen kann durch die Sperrung der zentralen Strecke auch vermieden werden, daß das Filtermaterial an die Wand gedrängt wird und so ein großer Teil des Rohwassers unter Benutzung eines Strömungsweges mit geringstmöglichem Widerstand von der Einlaßöffnung zur Auslaßöffnung gelangt.

Außerdem können von der zentralen Säule die konisch verlaufenden Trennwände ausgehen und abgestützt werden. Somit erreicht die zentrale Säule gleichzeitig zwei Ziele.

Weiterhin kann das Gehäuse aus einem im Inneren zylindrischen Mantel bestehen und an seinen Stirnseiten lösbare Kappen aufweisen. Durch diese Konstruktion wird ermöglicht, die Behandlungsstufen unter Weiterverwendung des Gehäuses ein und auszubauen und dabei einzelne oder alle verbrauchten Behandlungsstufen zu ersetzen.

Der Verwirbeler kann eine vom Wasserstrom angetriebene Turbine umfassen. Dadurch gelingt eine gute Verteilung der mit steigender Temperatur zum Ausgasen neigenden gasförmigen Wasserinhaltsstoffe, insbesondere des im Wasser vorhandenen oder injizierten Sauerstoffs. Die Gase reichern sich in kleinen Blasen an, die durch Verwirbelung besser im Wasser gehalten oder gelöst werden.

Vorzugsweise ist der Ionenabsorber und -austauscher als Zeolithe ausgebildet. Zeolithe sind wasserhaltige Alumosilikate mit dreidimensionalen Gitterstrukturen und besitzen die Eigenschaft, Ionen zu absorbieren und auszutauschen.

Die Behandlungsstufen können zusätzlich einen Magneten umfassen. Durch das vom Magneten erzeugte Magnetfeld werden elektrisch geladene Teilchen, wie z. B. Ionen, die mit dem Wasserstrom das Magnetfeld durchströmen in ihrer Bewegungsrichtung abgelenkt und so unterschiedliche geladene Teilchen getrennt. Dadurch wird die Reaktionsfreudigkeit der Ionen in nachfolgenden Behandlungsstufen verbessert. Ferner werden Hydrathüllen im Wasser vorhandener Mikropartikel durch Polarisation der Wasserdipole abgestreift und können dann als Kristallisationskeime für Kalk dienen. Auf diese Weise wird Kalk dem Wasser nicht entzogen, sondern nur die äußere Kristallform des Wassers verändert. Außerdem werden ferromagnetische Teilchen aus dem Rohwasser entfernt und lagern sich am Magneten an.

Die Behandlungsstufen können zusätzlich auch einen Entkeimer umfassen. Vorzugsweise ist der Entkeimer als Kupferioneninjektor ausgebildet. Die vom Kupferioneninjektor abgegebenen Ionen lagern sich an den Keimen, z. B. Bakterien oder Vieren an und machen sie durch Störung ihres Stoffwechsels inaktiv.

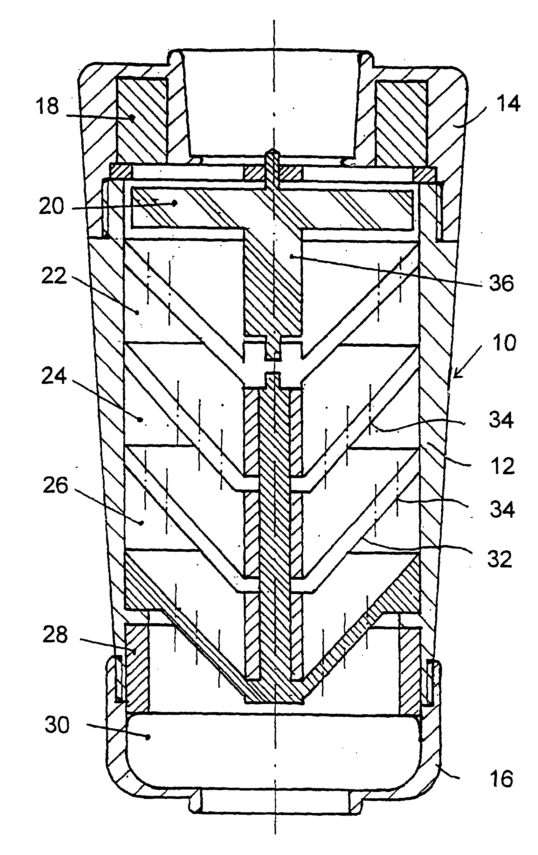

Nachfolgend wird ein Ausführungsbeispiel der Erfindung beschrieben, das in der Zeichnung dargestellt ist. Die Zeichnung zeigt eine Wasseraufbereitungsvorrichtung im Längsschnitt.

Ein Gehäuse 10 weist einen im Inneren zylindrischen Mantel 12 auf, der an seinen Stirnseiten lösbare Kappen 14 und 16 trägt. In der Kappe 14 befindet sich eine Einlaßöffnung und in der Kappe 16 eine Auslaßöffnung. Zwischen der Einlaßöffnung und der Auslaßöffnung sind mehrere Behandlungsstufen angeordnet. Eine erste Behandlungsstufe umfaßt einen Magneten 18, eine zweite Behandlungsstufe einen Verwirbeler 20 mit einer Turbine, die über einen nicht dargestellten Perlator zugeführten Luftsauerstoff sowie bereits im Wasser vorhandene Gase verwirbelt, eine dritte Behandlungsstufe ein Aktivkohlefilter 22, eine vierte Behandlungsstufe einen lonenabsorber und - austauscher 24 in Form von Zeolithen, eine fünfte Behandlungsstufe einen Kapillarkörper 26, eine sechste Behandlungsstufe einen Entkeimer 28, der als Kupferioneninjektor ausgebildet ist, und eine siebente Behandlungsstufe einen Mikropartikelfilter 30.

Das Aktivkohlefilter 22, der Ionenabsorber und - austauscher 24 sowie der Kapillarkörper 26 sind zu den anderen Behandlungsstufen und untereinander durch konisch verlaufende Trennwände 32 mit Überströmöffnungen 34 voneinander abgeteilt. Die Trennwände 32 gehen von einer zentralen Säule 36 aus, die sich durch das Gehäuse 10 von der Einlaßöffnung zur Auslaßöffnung erstreckt.

Dabei sind die Überströmöffnungen 34 in in Strömungsrichtung aufeinanderfolgenden Trennwänden 32 gegenseitig am Umfang und/oder im Durchmesser versetzt angeordnet. Durch Abschrauben der Kappe 14 und der Kappe 16 lassen sich alle Behandlungsstufen aus dem Gehäuse 10 entnehmen, überprüfen und teilweise oder ganz ersetzen.

## Patentansprüche

1. Wasseraufbereitungsvorrichtung, welche in eine Wasserleitung einfügbar oder an eine Wasserzapfstelle anschließbar ist, bestehend aus in einem Gehäuse (10) kaskadiert angeordneten Behandlungsstufen aus einem Aktivkohlefilter (22), einem Ionenabsorber und - austauscher (24) sowie einem Mikropartikelfilter (30) **dadurch gekennzeichnet, daß** die Behandlungsstufen ferner einen Verwirbeler (20) und einen Kapillarkörper (26) umfassen und daß wenigstens ein Teil der Behandlungsstufen durch konisch verlaufende Trennwände (32) mit Überströmöffnungen (34) voneinander abgeteilt sind und daß die Überströmöffnungen (34) in aufeinanderfolgenden Trennwänden (32) gegenseitig am Umfang und/oder im Durchmesser versetzt angeordnet sind.

2. Wasseraufbereitungsvorrichtung nach Anspruch 1, **dadurch gekennzeichnet, daß** innerhalb des Gehäuses (10) eine zentrale Säule (36) angeordnet ist.

3. Wasseraufbereitungsvorrichtung nach Anspruch 2, **dadurch gekennzeichnet, daß** von der zentralen Säule (36) die konisch verlaufenden Trennwände (32) ausgehen und durch die zentrale Säule abgestützt sind.

4. Wasseraufbereitungsvorrichtung nach einem der Ansprüche 1 bis 3, **dadurch gekennzeichnet, daß** das Gehäuse (10) aus einem im Inneren zylindrischen Mantel besteht, und an seinen Stirnseite lösbare Kappen (12, 14) aufweist.

5. Wasseraufbereitungsvorrichtung nach einem der Ansprüche 1 bis 4, **dadurch gekennzeichnet, daß** der Verwirbeler (20) eine vom Wasserstrom angetriebene Turbine umfaßt.

6. Wasseraufbereitungsvorrichtung nach einem der Ansprüche 1 bis 5, **dadurch gekennzeichnet, daß** der Ionenabsorber und -austauscher (24) als Zeolithe ausgebildet ist.

7. Wasseraufbereitungsvorrichtung nach einem der Ansprüche 1 bis 6, **dadurch gekennzeichnet, daß** die Behandlungsstufen zusätzlich einen Magneten (18) umfassen.

8. Wasseraufbereitungsvorrichtung nach einem der Ansprüche 1 bis 7, **dadurch gekennzeichnet, daß** die Behandlungsstufen zusätzlich einen Entkeimer (28) umfassen.

9. Wasseraufbereitungsvorrichtung nach Anspruch 8, **dadurch gekennzeichnet, daß** der Entkeimer (28) als Kupferioneninjektor ausgebildet ist.

## Claims

1. Water treatment device, which can be inserted in a water conduit and/or connected to a water tapping point, consisting of treatment stages which are disposed in cascade fashion in a housing (10) and consist of an activated-carbon filter (22), an ion absorber and exchanger (24) as well as a microparticle filter (30), **characterised in that** the treatment stages also comprise a turbulence generator (20) and a capillary body (26), and that at least some of the treatment stages are divided off from one another by partitions (32) extending in conical fashion and having overflow openings (34), and that the overflow openings (34) are disposed in mutually staggered fashion at the circumference and/or within the diameter in consecutive partitions (32).

2. Water treatment device according to Claim 1, **characterised in that** a central column (36) is disposed inside the housing (10).

3. Water treatment device according to Claim 2, **characterised in that** the conically extending partitions (32) start from the central column (36) and are supported by the central column.

4. Water treatment device according to any one of Claims 1 to 3, **characterised in that** the housing (10) consists of a shell of a cylindrical interior and has detachable caps (12, 14) at its front side.

5. Water treatment device according to any one of Claims 1 to 4, **characterised in that** the turbulence generator (20) comprises a turbine which is driven by the water flow.

6. Water treatment device according to any one of Claims 1 to 5, **characterised in that** the ion absorber and exchanger (24) is in the form of zeolites.

7. Water treatment device according to any one of Claims 1 to 6, **characterised in that** the treatment stages additionally comprise a magnet (18).

8. Water treatment device according to any one of Claims 1 to 7, **characterised in that** the treatment stages additionally comprise a steriliser (28).

9. Water treatment device according to Claim 8, **characterised in that** the steriliser (28) is in the form of a copper ion injector.

## Revendications

1. Appareil de traitement de l'eau pouvant être inséré dans une conduite d'eau ou connecté à un point d'eau, et comprenant dès étages de traitement, à savoir un filtre à charbon activé (22), un absorbeur et échangeur d'ions (24), ainsi qu'un filtre pour microparticules (30), disposés en cascade dans un boîtier (10), **caractérisé en ce que** les étages de traitement comprennent, en outre, un dispositif de tourbillonnement (20) et un corps capillaire (26) et que les étages de traitement sont, en partie au moins, séparés les uns des autres par des parois de séparation (32) de forme conique avec des ouvertures de débordement (34), les ouvertures de débordement (34) de parois de séparation (32) successives étant disposées décalées les unes par rapport aux autres sur la circonférence et/ou sur le diamètre.

2. Appareil de traitement de l'eau suivant la revendication 1, **caractérisé en ce qu**'une colonne centrale (36) est disposée à l'intérieur du boîtier (10).

3. Appareil de traitement de l'eau suivant la revendication 2, **caractérisé en ce que** les parois de séparation (32) de forme conique partent de la colonne centrale (36) et sont supportées par celle-ci.

4. Appareil de traitement de l'eau suivant une des revendications 1 à 3, **caractérisé en ce que** le boîtier (10) est constitué, à l'intérieur, d'un corps cylindrique et présente sur ses faces des chapeaux amovibles (12, 14).

5. Appareil de traitement de l'eau suivant une des revendications 1 à 4, **caractérisé en ce que** le dispositif de tourbillonnement (20) comprend une turbine entraînée par le courant d'eau.

6. Appareil de traitement de l'eau suivant une des revendications 1 à 5, **caractérisé en ce que** l'absorbeur et l'échangeur d'ions (24) est conçu en forme de zéolithe.

7. Appareil de traitement de l'eau suivant une des revendications 1 à 6, **caractérisé en ce que** les étages de traitement comprennent en plus un aimant (18).

8. Appareil de traitement de l'eau suivant une des revendications 1 à 7, **caractérisé en ce que** les étages de traitement comprennent en plus un dispositif de dégermage (28).

9. Appareil de traitement de l'eau suivant la revendication 8, **caractérisé en ce que** le dispositif de dégermage (28) est conçu en forme d'injecteur d'ions de cuivre.
